# EUROPÄISCHE PATENTANMELDUNG

(11) **EP 2 270 539 A2**
(43) Veröffentlichungstag der Anmeldung: **05.01.2011**
(21) Anmeldenummer: 10160153.2
(22) Anmeldetag: 16.04.2010
(51) Int. Cl.: G01S 13/42, G01S 13/93, G01S 13/58

(54) **Antennensteuerung für einen Radarsensor**

(30) Priorität: 15.06.2009 DE 102009026927
(71) Anmelder: Robert Bosch GmbH, 70442 Stuttgart (DE)
(72) Erfinder: Klar, Michael, 71106 Magstadt (DE); Hilsebecher, Joerg, 31135 Hildesheim (DE); Binzer, Thomas, 70565 Stuttgart (DE); Gross, Volker, 71254 Ditzingen (DE); Kuehnle, Goetz, 71282 Hemmingen (DE)

(57) **Zusammenfassung**

Eine Antennensteuerung für einen Radarsensor, der Sendesignale aussendet, die bezüglich unterschiedlicher Signalmodulationen und unterschiedlicher Radarantennen doppelt multiplexiert sind, umfasst eine Aufnahmeeinrichtung für Empfangssignale von Radarantennen und eine Multiplexsteuerung, die dazu eingerichtet ist, die Aufnahmeeinrichtung entsprechend der doppelten Multiplexierung derart anzusteuern, dass die Empfangssignale doppelt demultiplexiert werden.

## Beschreibung

### Stand der Technik

Radareinrichtungen werden in vielen Bereichen der Technik zur Bestimmung von Distanzen und Bewegungen verwendet. Insbesondere werden Radareinrichtungen im Bereich der Kraftfahrzeugtechnik verwendet, um beispielsweise Abstände zwischen einem Kraftfahrzeug und einem bewegten oder stillstehenden Objekt zu erfassen. In Fahrerassistenzsystemen für Kraftfahrzeuge werden Radareinrichtungen beispielsweise verwendet, um eine Richtungs- und/oder Geschwindigkeitssteuerung des Kraftfahrzeugs automatisch oder halbautomatisch von einem Abstand zu einem vorausfahrenden Kraftfahrzeug abhängig zu machen.

Entsprechend unterschiedlicher Fahrzustände des Kraftfahrzeugs kann es erforderlich sein, eine Radarmessung auf unterschiedliche Weisen durchzuführen. Dies kann einerseits bezüglich einer verwendeten Radarantenne, die eine vorbestimmte Charakteristik aufweist, und andererseits bezüglich einer verwendeten Modulation des ausgesendeten Radarsignals erfolgen. Sollen unterschiedliche Anwendungsfälle parallel abgedeckt werden, so werden üblicherweise mehrere Radareinrichtungen parallel betrieben, was die Komplexität des Gesamtsystems steigert und Kosten verursacht.

### Offenbarung der Erfindung

Der Erfindung liegt daher die Aufgabe zu Grunde, eine vereinfachte Technik anzugeben, mittels derer unterschiedliche Anwendungsfälle mittels eines Radarsensors abgedeckt werden können.

Diese Aufgabe wird gelöst durch eine Antennensteuerung gemäß Anspruch 1, einen Radarsensor nach Anspruch 9 und ein Kraftfahrzeug nach Anspruch 10. Unteransprüche geben bevorzugte bzw. sinnvolle Ausgestaltungen an.

Nach einem ersten Aspekt umfasst eine Antennensteuerung für einen Radarsensor, der Sendesignale aussendet, die bezüglich unterschiedlicher Signalmodulationen und unterschiedlicher Radarantennen doppelt multiplexiert sind, eine Aufnahmeeinrichtung für Empfangssignale von Radarantennen, und eine Multiplexsteuerung, die dazu eingerichtet ist, die Aufnahmeeinrichtung entsprechend der doppelten Multiplexierung derart anzusteuern, dass die Empfangssignale doppelt demultiplexiert werden.

Die erste Multiplexierung kann unterschiedliche Modulationen der Empfangssignale, beispielsweise eine der Modulationsarten CW, FMCW, Puls und Puls-Doppler umfassen. Die zweite Multiplexierung kann unterschiedliche Radarantennen umfassen, die unterschiedliche Charakteristiken aufweisen können, beispielsweise Weitsicht, Breitsicht, Fixed Beam (starre Keule) oder geschwenkter Beam (geschwenkte Keule).

Durch Verwendung einer einzigen Aufnahmeeinrichtung können doppelt multiplexierte Radarsignale ausgewertet werden, so dass eine Komplexität eines Radarsensors verringert werden kann, was zu Kostenvorteilen führen und eine Zuverlässigkeit des Radarsensors steigern kann. Trotzdem kann eine Analyse empfangener Signale schnell, genau und quasi-gleichzeitig durchgeführt werden.

Die empfangenen Signale können Echos von entsprechend multiplexierten Sendesignalen sein und die Multiplexsteuerung kann auch die Multiplexierung der Sendesignale steuern. Die Antennensteuerung kann von einem Sensor für ein Fahrerassistenzsystem eines Kraftfahrzeugs umfasst sein.

Die Aufnahmeeinrichtung kann beispielsweise ein Filter und ferner einen Abtaster umfassen, von denen beide gemeinsam oder unabhängig voneinander durch die Multiplexsteuerung gesteuert werden können. Das Filter kann beispielsweise ein analoges oder digitales Filter umfassen, welches dem Abtaster vor- oder nachgeschaltet sein kann. Das Filter kann beispielsweise Signalanteile bezüglich einer Frequenz, einer Zeit oder einer Phase diskriminieren bzw. isolieren. Insbesondere kann das Filter einen Hochpass, Bandpass oder Tiefpass umfassen.

Der Abtaster kann dazu ausgelegt sein, eine Abtastung eines Signals mit einer Abtastrate durchzuführen, die wesentlich oberhalb einer zu erwartenden Grenzfrequenz liegt. Durch eine solche Überabtastung können beispielsweise Signalformen genauer ermittelt und etwa im Rahmen einer digitalen Analyse weiter verarbeitet werden.

Nach einem zweiten Aspekt umfasst ein Radarsensor eine oben beschriebene Antennensteuerung. Der Radarsensor kann Antennen, Signalgeneratoren, Multiplexer, Demultiplexer, Filter, Abtaster und weitere Elemente umfassen und hoch integriert sein. In einer Ausführungsform ist der Radarsensor ein komplett integriertes Modul, das lediglich eine Stromzufuhr benötigt und über eine Datenschnittstelle mit Komponenten eines Kraftfahrzeugs kommuniziert.

Nach einem dritten Aspekt der Erfindung umfasst ein Kraftfahrzeug einen oben beschriebenen Radarsensor.

Im Folgenden soll eine Antennensteuerung mit Bezug auf die beigefügten Figuren genauer erläutert werden, in denen
- Figur 1 ein Blockschaltbild eines Radarsystems;
- Figur 2 unterschiedliche Abstrahlcharakteristiken des Radarsystems aus Figur 1, und
- Figur 3 ein Diagramm zur Veranschaulichung doppelt multiplexierter Signale zeigen.

Identische bzw. einander entsprechende Elemente tragen die gleichen Bezugszeichen in allen Figuren.

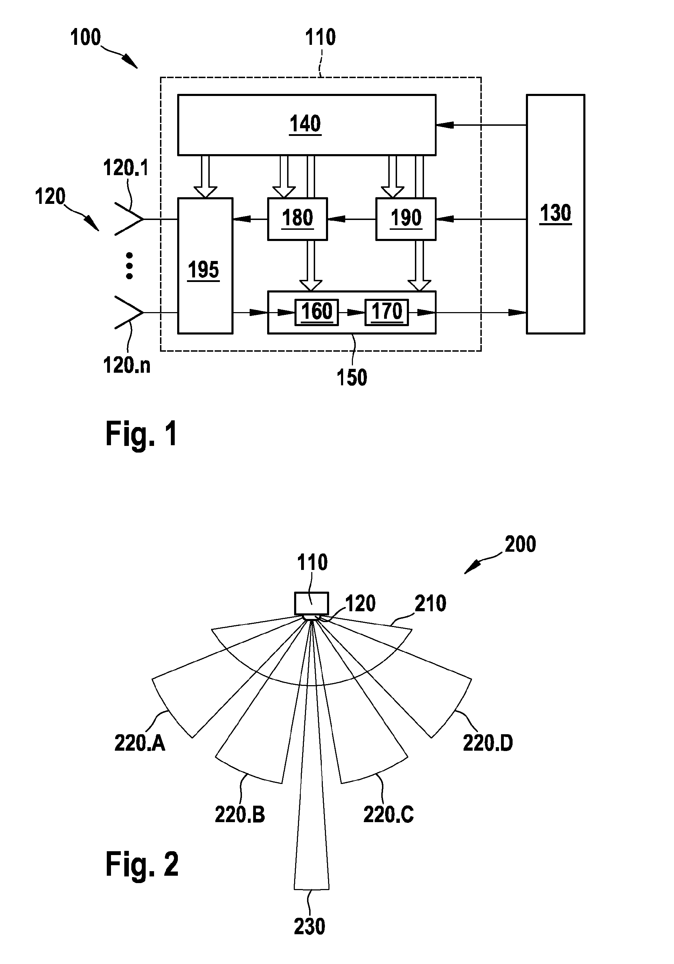

Figur 1 zeigt ein Radarsystem 100, das einen Radarsensor 110, eine Anzahl Radarantennen 120 und eine Verarbeitungseinrichtung 130 umfasst. Die Gesamtheit der Radarantennen 120 setzt sich aus den einzelnen Radarantennen 120.1 bis 120.n zusammen. Der Radarsensor 110 umfasst eine Multiplexsteuerung 140, eine Aufnahmeeinrichtung 150 mit einem Filter 160 und einem Abtaster 170, einen Frequenzgenerator 180, einen Modulator 190 und einen Antennensplitter 195.

Die Verarbeitungseinrichtung 130 kann beispielsweise einen Mikrocomputer und wenigstens eine Schnittstelle zu einer weiteren Verarbeitungseinrichtung, einem Aktuator oder einem Benutzer aufweisen. Die Verarbeitungseinrichtung 130 ist verbunden mit der Multiplexsteuerung 140 des Radarsensors 110 und kann Einfluss nehmen auf eine erste Multiplexierung bzw. Demultiplexierung bezüglich unterschiedlicher Modulationen von Signalen und/oder eine zweite Multiplexierung bzw. Demultiplexierung bezüglich unterschiedlicher Radarantennen 120.

Der Antennensplitter 195 kann sowohl in einer Sende- als auch in einer Empfangsrichtung eine Selektion einzelner Radarantennen 120.1 bis 120.n bewirken. Die Radarantennen 120.1 bis 120.n können unterschiedliche Charakteristiken, Positionen und/oder Ausrichtungen aufweisen. Der Antennensplitter 195 kann eine weitere Ansteuerung bzw. Aktivierung einzelner Radarantennen 120.1 bis 120.n umfassen, beispielsweise eine geometrische Ausrichtung von Radarantennen 120.x in Elevation oder Azimut oder ein Versetzen der Radarantennen in eine (ggf. periodische) Bewegung. In einer weiteren Ausgestaltung kann die Multiplexsteuerung 140 den Antennensplitter 195 auch derart ansteuern, dass sich mehrere der Radarantennen 120 wie eine einzige Radarantenne verhalten, beispielsweise durch phasenverzögerte Signalweiterleitung.

Die erste Multiplexierung bezüglich unterschiedlicher Modulationen kann solche aus einer Gruppe der Modulationen CW, FMCW, Puls und Puls-Doppler umfassen. Beispielsweise können im Rahmen einer Zeitmultiplexierung eine Pulsmodulation und eine Frequenzmodulation (FMCW) abgewechselt werden. Dazu steuert die Multiplexsteuerung 140 den Frequenzgenerator 180 in einem ersten Zeitabschnitt zur Abgabe eines Pulses einer gewünschten Frequenz an, wobei sie die Frequenz des abgegebenen Pulses mittels des Modulators 190 konstant hält. In einem zweiten Zeitabschnitt stellt die Multiplexsteuerung 140 den Frequenzgenerator 180 auf eine gewünschte Frequenz ein und steuert den Modulator 190 derart an, dass dieser den Frequenzgenerator 180 mittels eines Dreieckssignals ansteuert, um ein FMCW-Signal zu erzeugen. Erste und zweite Zeitabschnitte wechseln sich in rascher Folge ab, so dass eine Pulsmessung und eine FMCW-Messung praktisch gleichzeitig durchgeführt werden können.

Die zweite Multiplexierung bezüglich unterschiedlicher Radarantennen 120 kann Radarantennen mit Charakteristiken aus der Gruppe von Weitsicht, Breitsicht, Fixed Beam und geschwenkter Beam umfassen. Mittels des Antennensplitters 195 kann die Multiplexsteuerung 140 einzelne oder mehrere der Radarantennen 120 sowohl in sendender als auch in empfangender Richtung selektieren. In einer Fortführung des obigen Beispiels kann die Pulsmessung mittels einer Radarantenne 120.x mit Breitsicht-Charakteristik durchgeführt werden, während die FMCW-Messung mittels einer Radarantenne 120.x mit Weitsicht-Charakteristik durchgeführt wird.

Mittels der Radarantennen 120 empfangene Signale werden mittels der Multiplexsteuerung 140 in der Weise demultiplexiert, wie sie multiplexiert wurden. Beispielsweise steuert die Multiplexsteuerung 140 den Antennensplitter 195 für eine Demultiplexierung der zweiten Multiplexierung derart an, dass Radarsignale, die Echos zuvor ausgesandter, doppelt multiplexierter Radarsignale umfassen, mittels derjenigen Antennen 120.x empfangen werden, mittels derer sie zuvor ausgesandt wurden. Um anschließend auch die erste Multiplexierung zu demultiplexieren, steuert die Multiplexsteuerung 140 die Aufnahmeeinrichtung 150 ebenfalls in entsprechender Weise an. Im Fall einer Pulsmessung etwa ist die Bestimmung eines Zeitpunktes erforderlich, zu dem ein Echo eines ausgesandten Pulses eintrifft. Bei einer FMCW-Messung wird die Schwebefrequenz eines Signals bestimmt, das aus dem empfangenen und dem ausgesandten überlagert wird. Die Multiplexsteuerung 140 kann daher den Filter 160 und den Abtaster so einstellen, dass die jeweiligen Messungen durchgeführt werden.

Das Filter 160 kann dem Abtaster 170 bezüglich eines Signalpfades vom Antennensplitter 195 zur Verarbeitungseinrichtung 130 alternativ vor- oder nachgeordnet sein. Das Filter 160 kann analog oder digital aufgebaut sein, und beispielsweise eine Diskrimination bzw. Isolation von Signalanteilen bezüglich einer Frequenz, einer Zeit oder einer Phase durchführen. Der Abtaster 170 kann beispielsweise einen Analog-Digital-Wandler umfassen, der in einer Ausführungsform mit einer Abtastrate betrieben wird, die bei oder oberhalb des Zweifachen einer maximalen zu erwartenden Frequenz des abzutastenden Signals liegt (Nyquist-Frequenz). Auf diese Weise kann eine digitale Verarbeitung einer abgetasteten Signalform durch die Abtasteinrichtung 170 oder die Verarbeitungseinrichtung 130 durchgeführt werden. In einer Ausführungsform ist das Filter 160 dem Abtaster 170 nachgeordnet und von der Verarbeitungseinrichtung 130 mit umfasst.

Es kann alternativ auch ein anderes als ein Zeitmultiplexverfahren verwendet werden, beispielsweise ein Raum-, Code- oder Frequenzmultiplexverfahren.

Figur 2 zeigt unterschiedliche Abtastbereiche des Radarsensors 110 aus Figur 1 in einer exemplarischen Draufsicht auf den Radarsensor 110. Die gezeigte Anordnung kann beispielsweise an einem Kraftfahrzeug angebracht sein. Dargestellt sind neben dem Radarsensor 110 mit den Radarantennen 120 auch die Radarkeulen 210, 220 A bis 220 D und 230. Die Radarkeulen 210 bis 230 können jeweils unterschiedliche Elevations- und vertikale Öffnungswinkel aufweisen (nicht dargestellt). Jede der Radarkeulen 210 bis 230 veranschaulicht einen Radius und einen horizontalen Öffnungswinkel, die für eine Richtwirkung einer Radarantenne 120 im Sende- bzw. Empfangsbetrieb charakteristisch ist. In einer detaillierteren Darstellung können die Radarkeulen 210 bis 230 beispielsweise asymmetrische Ellipsen sein. Jeder Abtastbereich kann durch eine entsprechende Ansteuerung der Radarantennen 120 realisiert werden, wobei gegebenenfalls nur ausgewählte Radarantennen 120.1 bis 120.n angesteuert werden.

Ein erster Abtastbereich ist durch die relativ kurze und breite Radarkeule 210 gebildet. Dieser Abtastbereich kann an einem Kraftfahrzeug beispielsweise Objektdaten für eine Einparkhilfe bereitstellen. Ein zweiter Abtastbereich umfasst die vier einzelnen Radarkeulen 220.A, 220.B, 220.C und 220.D. Die Radarkeulen 220 sind länger und schmaler als die Radarkeule 210 und überlappen sich nicht oder - in Ellipsendarstellung - nur teilweise. Der zweite Abtastbereich kann beispielsweise verwendet werden, um bewegliche Ziele, die nacheinander mehrere der Radarkeulen 220.A bis 220.D passieren, zu detektieren. Die Bereiche zwischen den Radarkeulen 220.A bis 220.D bzw. die Überlappungsbereiche können erwünscht oder unerwünscht und im Vergleich zu den Radarkeulen 220 groß oder klein sein. Ein dritter Abtastbereich umfasst die Radarkeule 230, die länger und schmaler als die Radarkeulen 210 und 220 ist. Eine solche Konfiguration kann als Entfernungsradar (Long Range Radar, LRR) beispielsweise Entfernungsdaten zu einem Objekt für einen Geschwindigkeitsassistenten liefern.

Die Radarkeulen 210 bis 230 können paarweise einzelnen Radarantennen 120.1 bis 120.n zugeordnet sein oder durch entsprechende Ansteuerung mehrer Radarantennen 120 erzeugt werden. Mehrere Radarkeulen, insbesondere die Radarkeulen 220.A bis 220.D, können gleichzeitig oder in derart schneller Folge gebildet werden, dass messtechnisch von gleichzeitig vorhandenen Radarkeulen ausgegangen werden kann. Es können darüber hinaus unterschiedliche Modulationen verwendet werden, beispielsweise eine Dauerstrich-Modulation oder eine gepulste Modulation. Die Modulationen können alle oder nur einige der Radarantennen 120 betreffen. Die Modulationen können abhängig oder unabhängig von den Antennen multiplexiert sein. In einer Ausgestaltung erfolgt die erste Multiplexierung der unterschiedlichen Modulationsarten synchron mit der zweiten Multiplexierung unterschiedlicher Radarantennen 120, so dass eine doppelte Demultiplexierung des Radarsignals vorteilhaft zu bestimmen ist. Eine Generierung und Analyse empfangener doppelt multiplexierter Signale erfolgt wie oben mit Bezug zu Figur 1 beschrieben ist.

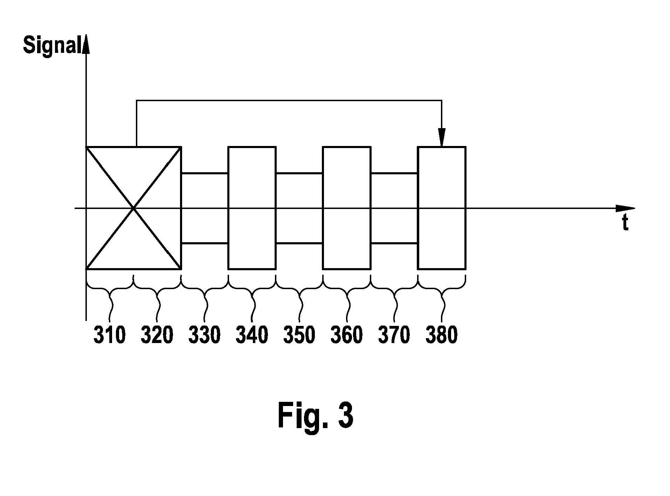

Figur 3 zeigt ein Diagramm 300 von doppelt multiplexierten Eingangssignalen in einem zeitlichen Verlauf. In einer horizontalen Richtung ist eine Zeit angetragen, in einer vertikalen Richtung eine Signalamplitude. Ferner sind entlang der horizontalen Achse gleich lange Zeitbereiche 310 bis 380 angegeben, in denen die Eingangssignale von unterschiedlichen Modulationen (erste Multiplexierung) bzw. Antennen (zweite Multiplexierung) geprägt sind. Beide dargestellten Multiplexierungen sind Zeit-Multiplexierungen.

Im Bereich 310 bis 320 wird mittels einer ersten Radarantenne 120.a ein Signalimpuls ausgesandt, dessen Laufzeit zu einem Objekt und zurück bestimmt werden soll, um eine Entfernung zum Objekt zu bestimmen. In regelmäßigen Abständen wird anschließend in den Bereichen 340, 360 und 380 die Radarantenne 120.a für einen Signalempfang aktiviert und das empfangene Signal auf Vorhandensein eines vom Objekt zurücklaufenden Echos überprüft. Ein solches Echo wird im Bereich 380 detektiert, so dass aus einem zeitlichen Abstand zwischen den Bereichen 310 und 380 die Laufzeit des Signals und daraus eine Objektentfernung bestimmt werden kann. In Bereichen 330, 350 und 370 wird parallel zu dieser Bestimmung eine weitere Radarmessung durchgeführt, indem mittels mehrerer Radarantennen 120, welche die Radarantenne 120.a umfassen können, beispielsweise eine Dopplermessung im Dauerstrich-Betrieb durchgeführt wird. In alternativen Herangehensweisen können auch vollständige Messungen, die Aussenden und Empfangen von doppelt multiplexierten Radarsignalen umfassen, alternierend durchgeführt werden.

Das in der Figur 3 dargestellte Diagramm stellt somit ein doppelt multiplexiertes Signal dar, wie es in einem System nach Figur 1 vom Antennensplitter 195 bereitgestellt sein kann, wobei eine erste Multiplexierung unterschiedliche Modulationsverfahren, wie beispielsweise gepulster oder frequenzmodulierter Betrieb, Doppler oder Puls-Doppler, und die zweite Multiplexierung die verwendeten Radarantennen 120.1 .. 120.n betreffen (vgl. Figur 2). Durch kombinierte Auswertung beider Multiplexierungen mittels einer integrierten Einrichtung 150 in Figur 1 ist es möglich, eine signifikante Anzahl schaltungstechnischer Bauteile (bzw. deren Emulation in Form einer Verarbeitung digitalisierter Daten) einzusparen und so für einen Kostenvorteil bei der Produktion und eine Steigerung der Betriebssicherheit zu sorgen.

## Patentansprüche

1. Antennensteuerung (140, 150) für einen Radarsensor (100), der Sendesignale aussendet, die bezüglich unterschiedlicher Signalmodulationen und unterschiedlicher Radarantennen (120) doppelt multiplexiert sind, umfassend:
- eine Aufnahmeeinrichtung (150) für Empfangssignale von Radarantennen (120),
**gekennzeichnet durch**
- eine Multiplexsteuerung (140), die dazu eingerichtet ist, die Aufnahmeeinrichtung (150) entsprechend der doppelten Multiplexierung derart anzusteuern, dass die Empfangssignale doppelt demultiplexiert werden.

2. Antennensteuerung (140, 150) nach Anspruch 1, **dadurch gekennzeichnet, dass** die Aufnahmeeinrichtung (150) ein durch die Multiplexsteuerung (140) gesteuertes Filter (160) umfasst.

3. Antennensteuerung (140, 150) nach Anspruch 1 oder 2, **dadurch gekennzeichnet, dass** die Aufnahmeeinrichtung (150) einen durch die Multiplexsteuerung (140) gesteuerten Abtaster (170) umfasst.

4. Antennensteuerung (140, 150) nach einem der Ansprüche 1 bis 3, **dadurch gekennzeichnet, dass** die erste Multiplexierung wenigstens eine Signalmodulation aus der Gruppe der Modulationen CW, FMCW, Puls und Puls-Doppler umfasst.

5. Antennensteuerung (140, 150) nach einem der Ansprüche 1 bis 4, **dadurch gekennzeichnet, dass** die zweite Multiplexierung wenigstens eine Radarantenne (120) mit Charakteristiken aus der Gruppe von Weitsicht, Breitsicht, Fixed Beam, geschwenkter Beam umfasst.

6. Antennensteuerung (140, 150) nach einem der Ansprüche 1 bis 5, **dadurch gekennzeichnet, dass** sie einen durch die Multiplexsteuerung (140) gesteuerten Frequenzgenerator (180) zur Erzeugung des Sendesignals umfasst.

7. Antennensteuerung (140, 150) nach einem der Ansprüche 1 bis 6, **dadurch gekennzeichnet, dass** sie einen von der Multiplexsteuerung (140) gesteuerten Modulator (190) zur Modulation des Sendesignals umfasst.

8. Antennensteuerung (140, 150) nach einem der Ansprüche 1 bis 7, **dadurch gekennzeichnet, dass** sie einen von der Multiplexsteuerung (140) gesteuerten Antennensplitter (195) zur Selektion von Radarantennen (120) umfasst.

9. Radarsensor (110), umfassend eine Antennensteuerung nach einem der Ansprüche 1 bis 8 und mehrere durch den Antennensplitter (195) selektierbare Radarantennen (120).

10. Kraftfahrzeug (210), umfassend einen Radarsensor (110) nach Anspruch 9.
